# EUROPÄISCHE PATENTANMELDUNG

(11) **EP 1 211 605 A2**
(43) Veröffentlichungstag der Anmeldung: **05.06.2002**
(21) Anmeldenummer: 01125122.0
(22) Anmeldetag: 23.10.2001
(51) Int. Cl.: G06F 13/42

(54) **Verfahren zum Empfangen von Daten**

(30) Priorität: 30.11.2000 DE 10059758
(71) Anmelder: ROBERT BOSCH GMBH, 70442 Stuttgart (DE)
(72) Erfinder: Wagner, Thomas, 72764 Reutlingen (DE); Boehl, Eberhard, Dr., 72768 Reutlingen (DE); Morosov, Andrej, 14471 Potsdam (DE)

(57) **Zusammenfassung**

Es wird ein Verfahren zum Empfangen von Daten vorgeschlagen, das dazu dient, bei Datensignalen, die mit konstanter Frequenz übertragen werden, wobei die Empfangseinrichtung mit dieser Frequenz arbeitet, Störungen durch eine Phasenverschiebung zwischen den Datensignalen und dem Takt dadurch auszugleichen, dass zwei Auslesevorrichtungen zeitversetzt betrieben werden und dass ein von einer der Auslesevorrichtungen ausgegebenes Signal ausgewählt wird, nachdem dieses Signal auf seine Gültigkeit überprüft wurde. Hierdurch kann auf eine zusätzliche Übertragung eines Betriebstaktes über ein Bussystem sowie auf eine Synchronisierung eines Eingangssignals mit einem Betriebstakt verzichtet werden.

## Beschreibung

### Stand der Technik

Die Erfindung geht aus von einem Verfahren zum Empfangen von Daten nach der Gattung des Hauptanspruchs. Aus der WO 99/19806 sind Bussysteme bekannt, bei denen zwischen einzelnen an den Bus angeschlossenen Einheiten Signale mit einer konstanten Frequenz übertragen werden. Wird ein solches Signal von einer ersten an den Bus angeschlossenen Einheit auf den Bus gegeben, so wird das Signal durch die Signallaufzeit, vor allem bei sehr langen Bussystemen, und insbesondere durch Schaltzeiten in anderen, an den Bus angeschlossenen Einheiten, verzögert. Wird das Signal nun an die erste, an den Bus angeschlossene Einheit zurückgeführt, ist das Signal im Allgemeinen gegenüber dem ausgesendeten Signal und damit gegenüber dem Betriebstakt der ersten Einheit phasenverschoben, während die Frequenz des Signals selbst immer noch die gleiche ist. Durch die Phasenverschiebung kann es bei der Abtastung des auf die erste Einheit zurückgeführten Signals zu Fehlern kommen, insbesondere in dem Fall, wenn das zurückgeführte Signal sich in einem Zeitraum ändert, während gerade eine Auslesevorrichtung in der ersten Einheit gemäß dem Betriebstakt der ersten Einheit schaltet. In einer solchen Einheit wird ein Eingangssignal auf zwei Flip-Flops gegeben, wobei das eine Flip-Flop mit einer steigenden Flanke des Betriebstakts der Empfangsvorrichtung und das zweite Flip-Flop mit einer fallenden Flanke des Betriebstakts der Empfangsvorrichtung das an einem Dateneingang anliegende Signal übernimmt. Die Phase des Betriebstaktes und die Phase des Eingangssignals werden mittels eines Phasenmesskreises verglichen und in Abhängigkeit von der gemessenen Phase wird über einen Multiplexer entweder das Ausgangssignal des ersten Flip-Flops oder das Ausgangssignal des zweiten Flip-Flops für eine weitere Verarbeitung ausgewählt. Da die Flip-Flops mit dem Betriebstakt der Empfangsvorrichtung angesteuert werden, werden die neuen Signale auf den Betriebstakt der Empfangsvorrichtung synchronisiert.

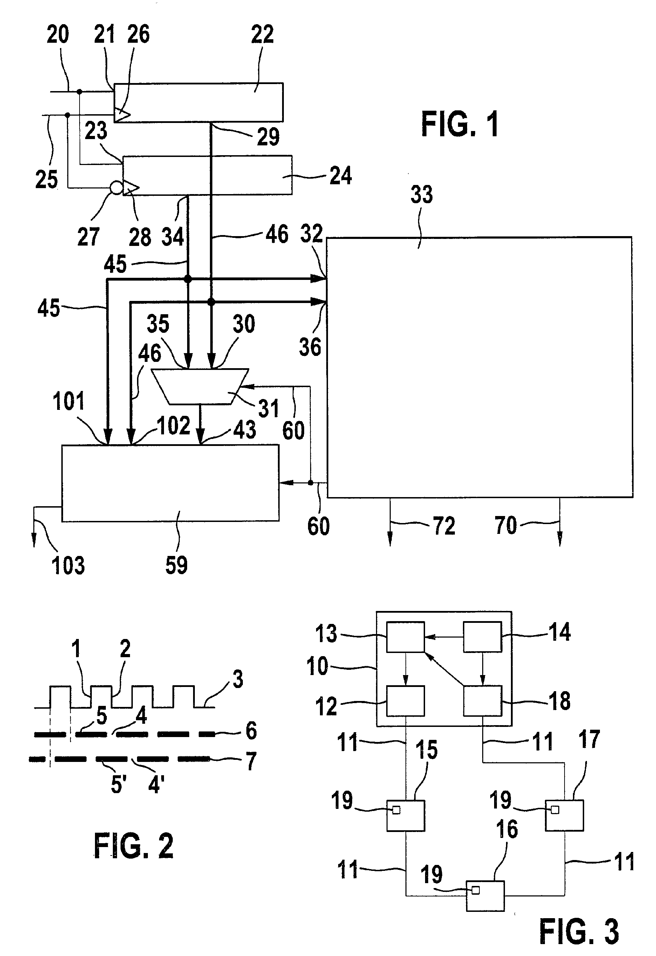

Ein dem Betriebstakt entsprechendes Rechtecktaktsignal 3 ist in der Figur 2 über der Zeit aufgetragen dargestellt. Zu dem Rechtecktaktsignal 3 sind Zeitbereiche 6 für den Eingang in das erste Flip-Flop dargestellt, in denen ein Wechsel des Eingangssignals erlaubt bzw. nicht erlaubt ist. Ferner sind entsprechende Zeitbereiche 7 für das zweite Flip-Flop dargestellt, in denen ein Wechsel des Eingangssignals erlaubt bzw. nicht erlaubt ist. Bei dem Flip-Flop, das auf eine fallende Taktflanke 2 schaltet, ist in einem Zeitbereich 4 ein Wechsel des Eingangssignals verboten, da während des Schaltzeitraums des Flip-Flops kein definierter Zustand vorliegt und es somit bei der Erfassung des Datensignals zu Fehlern kommen kann. In den übrigen Zeitbereichen 5 ist jedoch ein Wechsel des Eingangssignals möglich. Auch bei den Zeitbereichen 7 für das auf eine ansteigende Taktflanke 1 schaltende Flip-Flop sind zeitlich erlaubte Zeitbereiche 5' von zeitlich nicht erlaubten Zeitbereichen 4' in einer Umgebung der ansteigenden Taktflanke unterschieden. Die nicht erlaubten Zeitbereiche 4, 4' sind zeitlich disjunkt, da die beiden Taktflanken um eine halbe Periode gegeneinander verschoben sind und die Schaltzeit der Flip-Flops geringer als eine halbe Periode ist. Das Eingangssignal liegt mit konstanter Frequenz an, so dass ein Wechsel des Eingangssignals zwar zu einem unbekannten Zeitpunkt, jedoch in einer Schaltperiode immer in der gleichen Phasenlage erfolgt. Daher liegt dieser Zeitpunkt entweder in einem erlaubten Zeitbereich 5 oder in einem erlaubten Zeitbereich 5', so dass mindestens ein korrektes Signal vorliegt. Gemäß der WO 99/19806 wird ein Ausgangssignal eines der beiden Flip-Flops durch einen Phasenvergleich des Taktes des Eingangssignals mit dem Betriebstakt der Empfangsvorrichtung ausgewählt, wobei dann unter der Voraussetzung einer korrekten Übertragung zumindest von einem Flip-Flop korrekte Daten ausgegeben werden müssen. Für die Bestimmung der Phasendifferenz ist dabei eine aufwendige Schaltung erforderlich, die auch einen Integrator, also ein analoges Bauteil erfordert. Zudem muss ein Takt des Eingangssignals zur Verfügung stehen, der ebenfalls übermittelt werden muss.

### Vorteile der Erfindung

Das erfindungsgemäße Verfahren zum Empfangen von Daten mit den Merkmalen des Hauptanspruchs hat demgegenüber den Vorteil, dass die Ausgangssignale der Auslesevorrichtungen auf ihre Gültigkeit überprüft werden. Hierdurch kann in einer Empfängervorrichtung, die vorzugsweise eine Master-Einheit eines Bussystems ist und die die Taktfrequenz des Bussystems vorgibt, bei einem Empfang der durch die Übertragung über das Netzwerk modifizierten Daten auf eine Rückgewinnung des Taktes mittels einer Taktbestimmungseinheit, z.B. einer PLL, und auf eine Übertragung des Taktes verzichtet werden. Ferner ist auch kein Phasenvergleich des Betriebstaktes mit einem Eingangstakt erforderlich. Hierdurch kann auf eine zusätzliche Datenübermittlungsleitung für die Übertragung des Taktes verzichtet werden. Hierbei kann insbesondere auf analoge Schaltbauteile für einen Phasenmesskreis, wie sie z.B. für einen Integrator erforderlich sind, verzichtet werden, wodurch der Schaltungsaufwand vermindert wird. Ferner kann mittels der Überprüfung der Gültigkeit der Signale festgestellt werden, ob eine Übertragung fehlerfrei erfolgt ist, so dass Übertragungsfehler bei der Überprüfung direkt ermittelbar sind.

Durch die in den Unteransprüchen aufgeführten Maßnahmen sind vorteilhafte. Weiterbildungen und Verbesserungen des im Hauptanspruch angegebenen Verfahrens zum Empfang von Daten möglich. Besonders vorteilhaft ist, dass die Phase des ersten Taktes gegenüber der Phase des zweiten Taktes um eine halbe Periode verschoben ist bzw. dass die Auslesevorrichtungen mit dem gleichen Takteingangssignal arbeiten, aber zu jeweils entgegengesetzten und um eine halbe Periode auseinanderliegenden Flanken des Taktsignals ein anliegendes, zu empfangendes Datensignal einspeichern, da hierdurch ein größtmöglicher Abstand zwischen Zeitbereichen gewährleistet ist, in denen das Eingangssignal nicht wechseln darf, da die Auslesevorrichtungen in diesen Zeitbereichen angesteuert werden.

Weiterhin ist vorteilhaft, mit einer Überprüfungsvorrichtung zur Bestimmung der Gültigkeit der Signale eine Schaltvorrichtung anzusteuern, die ein gültiges Signal auswählt. Hierbei ist besonders vorteilhaft, wenn die Ergebnisse der Prüfung und damit die Entscheidung über das ausgewählte Signal in der Überprüfungsvorrichtung gespeichert wird, so dass zwar eine ständige Überprüfung möglich ist, sollte sich jedoch im Signalweg des Eingangssignals nichts ändern, das Überprüfungsergebnis auch ohne eine weitere, rechnerische Überprüfung zur Verfügung steht.

Weiterhin ist vorteilhaft, die Signale codiert zu übertragen, da durch eine Überprüfung der Korrektheit eines übertragenen Codes auf einfache Weise die Bestimmung der Gültigkeit der Signale möglich ist. Insbesondere ist durch eine Bildung eines Prüfwerts, z.B. anhand von übertragenen Paritätsdaten oder einer Aufsummierung bestimmter Datenwerte (z.B. bei der Verwendung eines CRC-Codes), eine schnelle und einfache Entscheidung möglich, ob die übertragenen Daten korrekt sind.

Weiterhin ist vorteilhaft, dass für den Fall, dass eine Gültigkeit der Daten nicht festgestellt wird, ein Fehlersignal ausgegeben wird, so dass an die Vorrichtung zum Empfangen von Daten angeschlossene, nachfolgende Vorrichtungen, z.B. eine Rechenvorrichtung, die das von der Empfangsvorrichtung ausgegebene Signal verarbeiten, darüber informiert werden, dass die zur Zeit übertragenen Daten möglicherweise nicht korrekt sind. Unterschiedliche Fehlersignale können ausgegeben werden, je nach dem ob beide Signale ungültig sind oder nur ein Signal ungültig ist. Wird die Ungültigkeit beider Eingangssignale festgestellt, ist davon auszugehen, dass die Übertragung unsicher ist, so dass hierauf gezielt reagiert werden kann, z.B. durch eine Wiederholung der Übertragung, durch ein Senden von Testsignalen.

Weiterhin ist vorteilhaft, einen Takt aus dem Datensignal zu gewinnen, so dass die Empfangsvorrichtung selbst nicht über einen eigenen Taktgenerator mit einer eigenen Zeitbasis verfügen muss, wie sie z.B. durch einen Schwingquarz gegeben sein kann. Bei der Verwendung verschiedener Zeitbasen können Abweichungen in der Frequenz bei verschiedenen Geräten zu Fehlern führen, so dass bei der Taktgewinnung aus dem Datensignal in einem Bussystem nur eine an den Bus angeschlossene Einheit über einen Taktgenerator mit einer eigenen Zeitbasis verfügen muss.

Die Anforderungen an eine Taktermittlungsschaltung, z.B. an eine PLL (phase locked loop) in einem Knoten des Bussystems ohne eigene Zeitbasis, sind hierbei gering, da nur die Frequenz, nicht jedoch eine exakte Phasenlage bestimmt werden muss, da eine korrekte Phasenlage bei einem überprüften, gültigen Signal gegeben sein muss. Genauso stören dann Unregelmäßigkeiten der Taktflanke nicht, z.B. geringe Zeitverschiebungen der Taktflanke, wenn nur die Taktfrequenz insgesamt konstant bleibt. Ferner ist eine Übertragung von Taktsignalen über weitere Busleitungen nicht erforderlich.

Weiterhin ist vorteilhaft, Daten zur Bestimmung der Gültigkeit über einen externen Anschluss an die Überprüfungsvorrichtung zu übertragen, so dass eine Anpassung der Überprüfungsvorrichtung bei einem geänderten, übertragenen Code der Signale möglich ist.

### Zeichnung

Ausführungsbeispiele der Erfindung sind in der Zeichnung dargestellt und in der nachfolgenden Beschreibung näher erläutert.

Es zeigen Figur 1 einen Schaltplan einer erfindungsgemäßen Vorrichtung zum Empfangen von Daten, Figur 2 einen Zeitverlauf eines Betriebstaktsignals und Bereiche, in denen ein Umschalten des Eingangssignals erlaubt beziehungsweise nicht erlaubt ist für beide Ansteuerungsvorrichtungen, Figur 3 ein erfindungsgemäßes Datenbussystem, Figur 4 einen erfindungsgemäßen Prüfablauf in der Überprüfungsvorrichtung und Figur 5 eine Darstellung einer Prüfeinheit zur Überprüfung der Gültigkeit der Signale im Detail als Teil einer erfindungsgemäßen Vorrichtung zum Empfangen von Daten.

### Beschreibung des Ausführungsbeispiels

Das erfindungsgemäße Verfahren findet insbesondere Verwendung in Datenbussystemen, die eine ringförmige Anordnung von elektrischen Geräten aufweisen, d.h. bei denen von einer Einheit ausgegebene Daten ggf. verändert an diese Einheit zurückgeführt werden. Im allgemeinen ist eines der elektrischen Geräte als ein taktbestimmendes, aktives Gerät, als ein sogenannter Master, ausgeführt. Alle anderen elektrischen Geräte in dem durch das Datenbussystem gegebene Netzwerk sind als passive Geräte ohne einen eigenen Taktgenerator, als sogenannte Slaves, ausgeführt. Die gesendeten Daten werden codiert, so dass einerseits eine Fehlererkennung möglich ist und andererseits jeder Slave den nicht mit übertragenen Takt aus den Daten mittels einer speziellen elektrischen Einrichtung, z.B. einer PLL (phase locked loop), zurückgewinnen kann. Dazu muß der Logikpegel des gesendeten Datensignals sich zumindest nach einer bestimmten Anzahl von gesendeten Datenbits eventuell sogar mehrfach ändern, um eine ständige Synchronisation der elektrischen Einrichtung zur Taktgewinnung mit den gesendeten Datenbits zu ermöglichen.

In der Figur 1 ist ein Schaltplan einer erfindungsgemäßen Vorrichtung zum Empfangen von Daten gemäß dem erfindungsgemäßen Verfahren dargestellt. Die in der Figur 1 dargestellte Vorrichtung ist in ein elektrisches Gerät eingebaut, das über einen Datenbus mit anderen elektrischen Geräten verbunden ist. Eine Übersichtsdarstellung hierzu ist in der Figur 3 dargestellt.

In der Figur 3 ist ein erstes elektrisches Gerät 10 dargestellt, das an einen Datenbus 11 angeschlossen ist. Über eine Ausgabeeinheit 12 des ersten elektrischen Geräts 10 werden Signale auf den Datenbus 11 gegeben. Die Signale werden von einer Recheneinheit 13 des ersten elektrischen Geräts 10 erzeugt. Das erste elektrische Gerät 10 dient vorzugsweise als ein Master, also als eine Hauptsteuerungseinheit des Datenbusses 11. Über einen Taktgenerator 14 wird ein Betriebstakt des ersten elektrischen Geräts 10 erzeugt. Mit diesem Betriebstakt werden die Signale von der Ausgabeeinheit 12 auf den Datenbus 11 gegeben. Der Datenbus 11 durchläuft ein zweites elektrisches Gerät 15, ein drittes elektrisches Gerät 16 und ein viertes elektrisches Gerät 17. Von einer Empfangsvorrichtung 18 werden die über den Datenbus 11 empfangenen Signale von dem ersten elektrischen Gerät 10 in erfindungsgemäßer Weise empfangen und an die Recheneinheit 13 zur weiteren Verarbeitung weitergeleitet. Durch die erfindungsgemäße Empfangsvorrichtung 18 wird das über den Datenbus 11 empfangene Signal an den Betriebstakt angepasst, der von dem Taktgenerator 14 erzeugt wird und mit dem auch die Empfangsvorrichtung 18 angesteuert wird. Vorzugsweise wird über den Datenbus 11 selbst kein Taktsignal übertragen, so dass über Taktermittlungsvorrichtungen 19, die an dem zweiten elektrischen Gerät 15, dem dritten elektrischen Gerät 16 und dem vierten elektrischen Gerät 17 angeordnet sind, aus dem Datensignal eine Bestimmung eines Betriebstaktes erfolgt. Die Taktermittlungsvorrichtungen 19 können dabei in die elektrischen Geräte 15, 16, 17 integriert oder extern an diesen angeordnet sein. Der Datenbus 11 kann z.B. als ein elektrischer Bus oder als ein optischer Datenbus ausgeführt sein. Ferner ist eine Realisierung einer drahtlosen Verbindung möglich, z.B. mittels einer Funkverbindung. Das in der Figur 3 beschriebene Bussystem findet vorzugsweise in einem Kraftfahrzeug Verwendung. Die elektrischen Geräte können hier einerseits Steuerungsgeräte für den Antriebsstrang oder das Bremssystem sowie Multimedia- beziehungsweise Kommunikationsgeräte im Fahrzeug sein, wie z.B. ein Radiogerät, ein Musikwiedergabegerät, eine Navigationsvorrichtung, ein Fernsehgerät oder ein Autotelefon, die über den Bus verknüpft sind und über diesen angesteuert werden sowie über diesen Informationen austauschen können.

In der Figur 1 ist die Empfangsvorrichtung 18 im Detail dargestellt. Ein Eingangssignal 20 wird von dem Datenbus 11 sowohl an einen ersten Eingang 21 eines ersten Schieberegisters 22 als auch an einen ersten Eingang 23 eines zweiten Schieberegisters 24 geleitet. Ein Betriebstaktsignal der Empfangsvorrichtung 18 wird an einen Ansteuerungseingang 26 des ersten Schieberegisters 22 geleitet, das die an dem ersten Eingang 21 anliegenden Daten mit einer ersten Taktflanke des Signals, hier der ansteigenden Taktflanke, verarbeitet. Ferner wird das Betriebstaktsignal 25 an einen Ansteuerungseingang 28 des zweiten Schieberegisters 24 geleitet, das die an dem ersten Eingang 23 anliegenden Daten mit einer zweiten Taktflanke des Signals, hier der abfallenden Taktflanke, verarbeitet. Die Ansteuerung über eine andere Taktflanke ist in der Figur 1 durch ein Symbol 27 gekennzeichnet. In einem weiteren Ausführungsbeispiel ist es auch möglich, einen Inverter vor den Ansteuerungseingang 28 des zweiten Schieberegisters 24 vorzuschalten oder zu in das zweite Schieberegister zu integrieren, wenn das zweite Schieberegister mit der gleichen Taktflanke wie das erste Schieberegister schaltet. In diesem Fall kann eine zeitliche Verzögerung des Taktsignals durch den Inverter jedoch eine Verschiebung der Zeitbereiche 4' und 5' gegenüber 4 und 5 (vgl. Figur 3) bewirken.

Das Betriebstaktsignal 25 zur Ansteuerung der Empfangsvorrichtung 18 ist vorzugsweise als ein Rechtecksignal ausgeführt. In dem gewählten Ausführungsbeispiel schaltet dabei das erste Schieberegister 22 bei einer ansteigenden Taktflanke und das zweite Schieberegister 24 bei einer fallenden Taktflanke. Das erste Schieberegister 22 liest bei einer über den Ansteuerungseingang 26 empfangenen ansteigenden Taktflanke das Eingangssignal 20 aus und legt dieses in einem ersten Register des Schieberegisters ab. Die übrigen Daten werden um eine Registerstufe verschoben und der Datenwert des ersten Schieberegisters 22 wird über einen Ausgang 29 des ersten Schieberegisters 22 als ein erstes Ausgangssignal 46 an einen ersten Eingang 30 einer Schaltvorrichtung 31, an einen ersten Eingang 32 einer Überprüfungsvorrichtung 33 sowie einen ersten Eingang 101 einer Speichereinrichtung 59 weitergegeben. Das zweite Schieberegister 24 schaltet bei einer fallenden Taktflanke und liest hierbei ebenfalls das Eingangssignal 20 aus. Ferner gibt das zweite Schieberegister 24 über einen zu dem Ausgang 29 parallelen Ausgang 34 des zweiten Schieberegisters 24 ein zweites Ausgangssignal 45 an einen zweiten Eingang 35 der Schaltvorrichtung 31, an einen zweiten Eingang 36 der Überprüfungsvorrichtung 33 und an einen zweiten Eingang 102 der Speichereinrichtung 59 das in dem Schieberegister gespeicherte Datensignal weiter. In der Überprüfungsvorrichtung 33 werden das an die Überprüfungsvorrichtung 33 übertragene erste Ausgangssignal 46 und das zweite Ausgangssignal 45 auf ihre Gültigkeit hin überprüft. Die Überprüfungsvorrichtung 33 gibt nach der Überprüfung ein Auswahlsignal 60 an die Speichereinrichtung 59 und die Schaltvorrichtung 31 aus, mit der ein gültiges Signal aus den beiden Ausgangssignalen 45, 46 ausgewählt wird. Ferner wird von der Überprüfungsvorrichtung 33 ein Vertrauenssignal 70 und ein Fehlersignal 72 ausgegeben. Das Vertrauenssignal 70 wird ausgegeben, wenn mindestens eines der Ausgangssignale 45, 46 für gültig befunden wird, und das zweite Fehlersignal 72 wird ausgegeben, wenn festgestellt wird, dass beide Ausgangssignale 45, 46 ungültig sind. Die gültigen Daten sind über einen Ausgang 103 aus der Speichereinrichtung 59 auslesbar, z.B. von der Recheneinheit 13, die auch das Vertrauenssignal 70 und das Fehlersignal 72 abfragen kann.

Die Darstellung eines Betriebstaktes und erlaubter bzw. nicht erlaubter Zeitbereiche in der Figur 2 ist auf die vorliegende erfindungsgemäße Vorrichtung zum Empfangen von Daten bzw. das erfindungsgemäße Verfahren übertragbar, wobei das erste Schieberegister 22 z.B. bei der ansteigenden Taktflanke 1 schaltet und das zweite Schieberegister 24 bei der fallenden Taktflanke 2 schaltet.

Die Datensignale werden vorzugsweise codiert übertragen und durch die Überprüfungsvorrichtung 33 wird die Gültigkeit des Signals überprüft. Dabei wird die Codebildungsvorschrift überprüft. Ist der Code, vorzugsweise ein sogenannter fehlererkennender Code, ein Paritätsbitcode, wird dazu entweder die gesamte Anzahl der codierten Bits in dem ersten Schieberegister 22 oder dem zweiten Schieberegister 24 gespeichert und auf die Anzahl von Einsen bzw. von Nullen geprüft, oder bei einer geringeren Länge der Schieberegister 22, 24 kann auch das gesamte codierte Signal zunächst in einem Speicher abgelegt werden und zu einem nachfolgenden Zeitabschnitt mittels einer Berechnung der Codevorschrift überprüft werden. Auch ist es möglich, dass in der Überprüfungsvorrichtung 33 gemäß Fig. 1 jeweils der Teil des Codes, der in den Schieberegistern 22, 24 enthalten ist, überprüft wird und das Zwischenergebnis der Prüfung in der Überprüfungsvorrichtung 33 gespeichert wird. Dieses Zwischenergebnis wird dann jeweils für die Überprüfung des nächsten Schieberegisterinhalts weiterbenutzt, bis das gesamte Codewort geprüft wurde und damit eine Entscheidung über die Gültigkeit der Daten getroffen werden kann. Auch in diesem Falle müssen die Daten beider Schieberegister in einem Speicher so lange zwischengespeichert werden, bis Entscheidung über die Gültigkeit durch die Überprüfungsvorrichtung 33 getroffen werden kann. Anstelle eines Paritätsbitcodes können auch andere Codes wie zum Beispiel auch ein CRC-Code (cyclic redundancy code) eingesetzt werden.

Zur Überprüfung der Gültigkeit der Daten in den Schieberegistern 22, 24 kann aber auch zusätzlich der Empfang von Schlüsselwörtern überprüft werden. Solche Schlüsselwörter sind bei Bussystemen üblich, um den Beginn oder auch das Ende einer Nachricht zu kennzeichnen, wie z.B. Start- und Stoppbits oder Präambeln mit vier speziell codierten Bits zur Erkennung des Anfangs einer Nachricht. Steht zusätzlich die Länge der Nachricht fest und wird die Übertragung periodisch fortgeführt, so wird das Erkennen eines Schlüsselwortes in periodisch gleichen Abständen erwartet. In der Überprüfungsvorrichtung 33 kann dazu ein Zähler mit dem Erkennen eines solchen Schlüsselwortes auf einen definierten Wert (z.B. Null) gesetzt und die Anzahl der nachfolgenden Takte gezählt werden. Wird beispielsweise zu einem späteren Zeitpunkt, an dem erneut ein Schlüsselwort erwartet wird, kein Schlüsselwort erkannt, so sind die bis dahin empfangenen Daten nicht als gültig zu betrachten.

Es ist weiterhin zu beachten, dass in beiden Schieberegistern 22, 24 gültige Daten empfangen werden können, wenn sich die Daten für das erste Schieberegister 22 während des Zeitbereichs 5 und die Daten für das zweite Schieberegister 24 in dem Zeitbereich 5' ändern. Da sich die Zeitbereiche 5 und 5' teilweise überlappen, wird in diesem Fall in keinem der beiden Schieberegister ein Codierungsfehler entdeckt und auch die Schlüsselwörter werden jeweils zum erwarteten Zeitpunkt erkannt. In diesem Fall sind aber auch die parallelen Ausgangsdaten 45 und 46 gleich, wenn man von einer möglichen Verschiebung um ein Bit absieht.

Wegen der Verschiebung wird zumindest eines der Schieberegister um ein Bit mehr ausgelesen, als es zur Codeund Schlüsselworterkennung notwendig ist.

Im Verlaufe des Datenempfangs können folgende Bedingungen für die zwei parallelen Ausgangssignale 45, 46 auftreten :
1. Die Daten sind fehlerfrei und gleich
2. Die Daten sind fehlerfrei und gleich, aber um ein Bit gegeneinander verschoben
3. Die Daten sind beide fehlerfrei, aber voneinander verschieden
4. Nur die Daten eines Schieberegisters sind fehlerfrei
5. Die Daten in beiden Schieberegistern sind fehlerhaft

Für die Fälle 1 und 2 verarbeitet man die Daten eines beliebigen vorgegebenen Schieberegisters. In dem Fall 4 werden die Daten des fehlerfreien Schieberegisters weiterverarbeitet. In dem Fall 5 wird das Fehlersignal gesetzt und es werden keine Daten zur weiteren Verarbeitung ausgewählt. Der Fall 3 ist ein Sonderfall: Offensichtlich ist zumindest in einem Schieberegister das Datum falsch, aber es kann nicht entschieden werden, in welchem. Das kann daran liegen, dass der gewählte Code bezüglich seiner fehlererkennenden Eigenschaften ungenügend ist, z.B. ein Paritätsbitcode, der nur Einfachfehler erkennen kann und es liegen zwei Bitfehler in einem Schieberegister vor, oder dass die Codeprüfung erst nach dem Empfang des gesamtem Codeworts vorgenommen wird und noch nicht erfolgt ist, oder dass das Schlüsselwort noch nicht überprüft wurde. In diesem Fall kann zunächst keine Entscheidung getroffen werden, aber spätestens nachdem sowohl Codewort und/oder Schlüsselwort geprüft wurden, muss das Fehlersignal gesetzt werden, sofern sich nicht der Fall 4 noch einstellt. Dem Auftreten des Falles 3 kann durch geeignetere Codierung der Daten entgegengewirkt werden, so dass es möglich wird, die Daten 45,46 zu jedem Zeitpunkt einem der Fälle 1,2,4 oder 5 zuzuordnen.

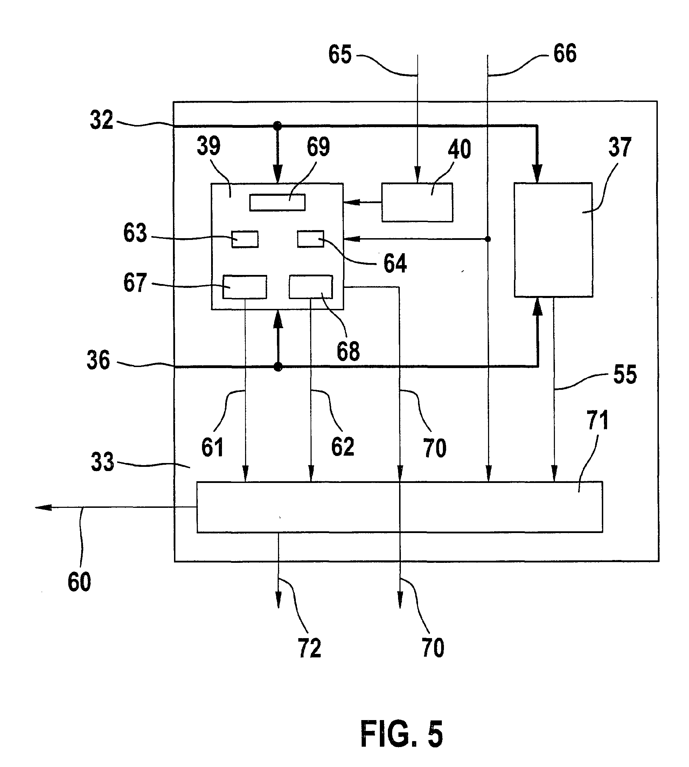

In der Figur 5 ist die Überprüfungsvorrichtung im Detail dargestellt. Hier und im folgenden bezeichnen die gleichen Bezugszeichen auch die gleichen Elemente. Der erste Eingang 32 und der zweite Eingang 36 der Überprüfungsvorrichtung 33 sind mit einer Vergleichseinrichtung 37 verbunden, die überprüft, ob das erste Ausgangssignal 46 gleich dem zweiten Ausgangssignal 45 bzw. ob die beiden Ausgangssignale 45, 46 um maximal ein Bit gegeneinander verschoben sind. Die Vergleicheinrichtung gibt ein Vergleichssignal 55 an eine Auswahleinheit 71 aus, mit dem sie der Auswahleinheit 71 mitteilt, ob beide Signale an den Eingängen 32, 36 bis auf eine maximale Verschiebung um ein Bit gegeneinander gleich sind. Weiterhin werden die Signale an dem ersten Eingang 32 und dem zweiten Eingang 36 jeweils an eine Codeprüfungseinrichtung 39 übermittelt. In der Codeprüfungseinrichtung 39 wird gemäß einer in einer Speichereinheit 40 abgelegten Codeprüfungsvorschrift überprüft, ob die Ausgangssignale 45, 46 den Codierungsvorschriften entsprechen. Sollte durch die Codeprüfungseinrichtung 39 ein Fehler ermittelt werden, so wird ein erster Fehlerspeicher 67 für das erste Ausgangssignal und/oder ein zweiter Fehlerspeicher 68 für das zweite Ausgangssignal gesetzt. Der Zustand der Fehlerspeicher wird über ein erstes Fehlersignal 61 für den ersten Fehlerspeicher 67 bzw. und durch ein zweites Fehlersignal 62 für den zweiten Fehlerspeicher 68 der Auswahleinheit 71 signalisiert. Die Codeprüfungsvorschrift kann vorzugsweise durch einen Dateneingang 65 in der Speichereinheit 40 geladen oder geändert werden, so dass der zu prüfende Code an jeweils vorliegende Bedingungen, z.B. der in dem Bussystem verwendete Code, angepasst werden kann. Die Codeprüfung erfolgt je nach Code z.B. durch eine Bestimmung der Anzahl von Einsen im Codewort bei der Verwendung eines sogenannten Paritätscodes, durch Bestimmung der aufeinander folgenden Taktzyklen mit gleichem logischen Pegel einer Signalsequenz, d.h. einer maximal zulässigen Anzahl von benachbarten gleichen Datenwerten im Schieberegister bei der Verwendung eines sogenannten Zweifrequenz- oder Zweiphasen-Codes oder durch logische Verknüpfung, Summation und Verschiebung sowie einem Vergleich des Resultats von Verknüpfungsoperationen mit einem vorgegebenen Wert. Darüber hinaus wird in der Codeprüfungseinrichtung 39 geprüft, ob das erste Ausgangssignal 46 oder das zweite Ausgangssignal 45 mit ihrem Bitmuster einem Schlüsselwort entsprechen, dass ebenfalls in der Speichereinheit 40 abgelegt ist. Über den Dateneingang 65 können beliebige neue Schlüsselwörter geladen sowie gespeicherte Schlüsselwörter verändert werden. Die Schlüsselwörter sind vorzugsweise so codiert oder durch ihr zeitliches Auftreten so bestimmt, z.B. nach einer Übertragungspause, dass keine Verwechslung mit einem zu übertragenden Datenwort erfolgen kann. Tritt ein solches Schlüsselwort erstmalig auf und wird es in der Codeprüfungseinrichtung 39 erkannt, so wird ein dem ersten Ausgangssignal 46 zugeordnetes erstes Speicherelement 63 bzw. eine dem zweiten Ausgangssignal 45 zugeordnetes zweites Speicherelement 64 gesetzt. Gleichzeitig wird ein Zähler 69 auf einen vorgegebenen Rücksetzwert gesetzt. Dieser Zähler wird mit jedem Taktsignal verändert, vorzugsweise um 1 inkrementiert. Bei einem erneuten Erkennen eines Schlüsselwortes für das gleiche Signal wird der dann erreichte Zählerstand des Zählers 69 mit einem vorzugsweise in der Speichereinheit 40 abgelegten Sollwert verglichen. Entspricht der Zählerstand des Zählers 69 nicht dem Sollwert, so wird ein Fehler in dem ersten bzw. in dem zweiten Fehlerspeicher 67, 68 gespeichert, je nach dem, ob das erste Ausgangssignal 46 oder das zweite Ausgangssignal 45 betroffen ist. Ein Fehler wird auch dann ermittelt, wenn der Zähler 69 einen Sollwert erreicht, ohne dass erneut ein Schlüsselwort erkannt wird. Der Sollwert des Zählers kann vorzugsweise ebenfalls über den Dateneingang 65 in der Speichereinheit 40 beliebig vorgegeben und gespeichert werden. Die erste und/oder das zweite Speicherelement 63, 64 werden gelöscht, wenn der entsprechende erste und/oder zweite Fehlerspeicher 67 bzw. 68 gesetzt wird, weil man in diesem Fall nicht sicher sein kann, ob wirklich ein Schlüsselwort zum Setzen eines der Speicherelemente 63 bzw. 64 geführt hat oder ob ein Übertragungsfehler vorliegt. Über ein Rücksetzsignal 66 sind die Speicherelemente 63, 64 und der Zähler 69 löschbar. Ist einer der ersten und zweiten Speicherelemente 63, 64 gesetzt, wird in der Codeprüfungseinrichtung 39 ein erneutes Schlüsselwort erkannt und stimmt der Zählerstand des Zählers 69 mit dem vorgegebenen Sollwert überein, so wird das Vertrauenssignal 70 gesetzt. Das Vertrauenssignal 70 signalisiert die erfolgreiche Prüfung der Gültigkeit eines Ausgangssignals. Das Vertrauenssignal wird zurückgesetzt, wenn die entsprechenden Bedingungen nicht mehr erfüllt sind.
Bei jedem erfolgreichen Vergleich eines Ausgangssignals mit einem Schlüsselwort durch die Codeprüfungseinrichtung 39 wird der Zähler 69 auf den vorgegebenen Rücksetzwert zurückgesetzt und das Vertrauenssignal 70 wird gesetzt. In der Codeprüfungseinrichtung 39 wird das Auftreten eines Codefehlers und/oder eines Schlüsselwortfehlers an dem ersten Eingang 32 oder dem Eingang 36 bzw. in dem ersten und/oder zweiten Ausgangssignal 45, 46 wie oben beschrieben in den zwei diesen Eingängen zugeordneten ersten und zweiten Fehlerspeichern 67, 68 gespeichert. Die Fehlerspeicher 67, 68 werden nur durch das Rücksetzsignal 66 wieder gelöscht.

Ist nur eine der beiden Fehlerspeicher 67 bzw. 68 gesetzt, so wird das Auswahlsignal 60 von der Auswahleinheit 71 entsprechend aktiviert, um ein als fehlerfrei erkanntes Ausgangssignal 45 oder 46 über die Schaltvorrichtung 31 auszuwählen und diese Auswahl in der Speichereinrichtung 59 abzuspeichern. Falls die Codeprüfung noch nicht abgeschlossen ist oder kein Fehler festgestellt wurde, werden zunächst vorzugsweise beide Signale in der Speichereinrichtung 59 abgelegt. Das gültige Ausgangssignal wird dann nach Abschluss der Prüfung aus dem Speicher mit Hilfe des Auswahlsignals 60 ausgewählt, wobei für den Fall, dass zwei Ausgangssignale gültig sind, ein festgelegter Vorzugswert gespeichert ist, z.B. das erste Auswahlsignal 46. Steht das weiterzuverarbeitende Ausgangssignal fest, so wird über einen Ausgang 43 der Schaltvorrichtung 31 nur das weiterzuverarbeitende, ausgewählte Ausgangssignal an die Speichereinrichtung 59 weitergeleitet. Sind beide Fehlerspeicher 67 und 68 gesetzt, so wird ein Fehler über das Fehlersignal 72 signalisiert. Das gleiche Fehlersignal 72 wird aktiv, wenn keiner der beiden Fehlerspeicher 67 bzw. 68 gesetzt ist, aber die Daten nicht gleich sind, wie es der Auswahleinheit 71 über das Vergleichssignal 55 übermittelbar ist.

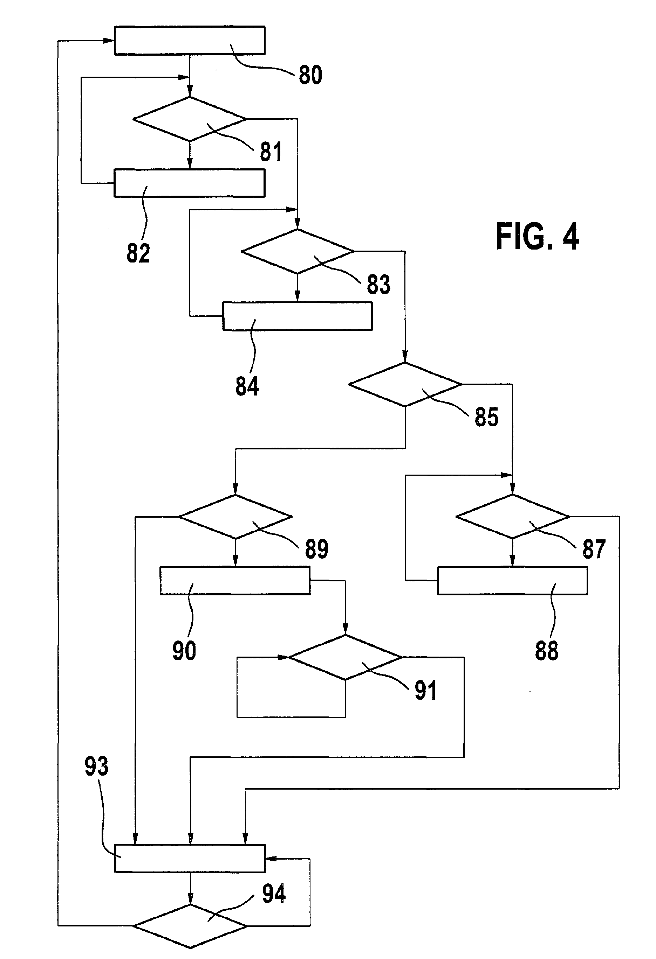

In der Figur 4 ist ein Verfahrensablauf des erfindungsgemäßen Prüfverfahrens für die eingehenden Daten dargestellt. Während des Ablaufs des erläuterten Verfahrens, werden die an die Überprüfungsvorrichtung übermittelten Daten, also die Ausgangssignale 45, 46 der Schieberegister 22, 24, fortlaufend geprüft und entsprechend wird ein Prüfergebnis der Auswahleinheit 71 über die jeweils zugeordneten Speicherzellen mitgeteilt. In einem Initialisierungsschritt 80 werden alle Zähler und während des Datenempfangs variablen Speicherzellen auf einen Anfangswert, sowie das Vertrauenssignal 70, das Fehlersignal und das Auswahlsignal 60 zurückgesetzt. An den Initialisierungsschritt schließt sich ein erster Prüfschritt 81 an, in dem geprüft wird, ob das Vertrauenssignal 70 aktiviert ist. Ist dies nicht der Fall, so wird zu einem Ermittlungsschritt 82 weiterverzweigt, in dem ermittelt wird, ob zumindest an einem der beiden Eingänge 32, 36 zweimal ein Schlüsselwort erkannt wurde und ob der Zählerstand des Zählers 69 bei der zweiten und jeder weiteren Prüfung mit dem Sollwert übereinstimmte. Ist dies der Fall, so wird in dem Ermittlungsschritt 82 das Vertrauenssignal 70 gesetzt. Anschließend wird zu dem ersten Prüfschritt zurückverzweigt. Wird in dem ersten Prüfschritt 81 festgestellt, dass das Vertrauenssignal anliegt, so wird zu einem zweiten Prüfschritt 83 verzweigt, in dem geprüft wird, ob das Vergleichssignal 55 anliegt, d.h. ob alle empfangenen Daten bisher gleich waren. Ist dies der Fall, gelangt man in einen ersten Auswahlzustand 84, in dem das Auswahlsignal 60 auf einen Vorgabewert, z.B. auf das erste Ausgangssignal 46 gesetzt wird. Anschließend wird zu dem zweiten Prüfschritt 83 zurückverzweigt. Wird in dem zweiten Prüfschritt 83 festgestellt, dass die Datengleichheit nicht gegeben ist, so wird zu einem dritten Prüfschritt 85 verzweigt, in dem geprüft wird, ob das zweite Fehlersignal 62 gesetzt ist. Wird in dem dritten Prüfschritt 85 festgestellt, dass das zweite Fehlersignal 62 nicht gesetzt ist, so wird zu einem vierten Prüfschritt 89 verzweigt, in dem das erste Fehlersignal 61 geprüft wird. Ist das erste Fehlersignal 61 gesetzt, so wird zu einem zweiten Auswahlzustand 90 verzweigt, in dem das Auswahlsignal 60 so gesetzt wird, dass das zweite Ausgangssignal 45 ausgewählt wird. In einem anschließenden fünften Prüfschritt 91 wird geprüft, ob das zweite Fehlersignal 62 weiterhin nicht gesetzt ist. Ist das zweite Fehlersignal 62 weiterhin nicht gesetzt, so wird der fünfte Prüfschritt 91 wiederholt. Wird in dem fünften Prüfschritt 91 festgestellt, dass das zweite Fehlersignal 62 nun gesetzt ist, so wird ein Fehlerzustand 93 eingenommen, da nun ein Fehler beider Ausgangssignale ermittelt wurde. In dem Fehlerzustand 93 wird das Fehlersignal 72 wird gesetzt. Wird in dem vierten Prüfschritt 89 ermittelt, dass das erste Fehlersignal 61 nicht gesetzt ist, so wird ebenfalls zu dem Fehlerzustand 93 verzweigt und das Fehlersignal 72 gesetzt, da die Daten zwar unterschiedlich sind, aber kein Fehler in einem von beiden Signalen entdeckt werden konnte. Für den Fall, dass in dem dritten Prüfschritt 85 festgestellt wird, dass das zweite Fehlersignal 62 gesetzt ist, wird in einem sechsten Prüfschritt 87 geprüft, ob das erste Fehlersignal 61 auch gesetzt ist. Ist das erste Fehlersignal 61 gesetzt, so wird ebenfalls der Fehlerzustand 93 erreicht, da beide Signale fehlerhaft sind. Wird in dem sechsten Prüfschritt 87 ermittelt, dass das erste Fehlersignal nicht aktiv ist, so wird zu einem dritten Auswahlzustand 88 verzweigt, in dem das Auswahlsignal 60 so gesetzt wird, dass das erste Ausgangssignal 46 durch das Auswahlsignal 60 ausgewählt wird. Danach wird zu dem sechsten Prüfschritt 87 zurückverzweigt. Ausgehend von dem Fehlerzustand 93 wird ein siebter Prüfschritt 94 durchgeführt, in dem geprüft wird, ob eine erneute Initialisierung der Empfangsvorrichtung erfolgen soll. Z.B. durch die Recheneinheit 13 wird ein hierzu erforderlicher Befehl an die Überprüfungsvorrichtung 33 weitergeleitet, z.B. durch ein Auslösen des Rücksetzsignals 66, und es wird zu dem Initialisierungsschritt 80 verzweigt.

In einem weiteren Ausführungsbeispiel ist es auch möglich, den fünften und sechsten Prüfschritt nur dann durchzuführen, wenn das System sich in dem zweiten oder dritten Auswahlzustand 90, 88 befindet, wenn sich an der Architektur des Bussystems, z.B. durch eine Verlängerung oder Verkürzung der Buslänge, Veränderung des Zeitverhaltens auf dem Bus durch Aktivierung oder Deaktivierung einzelner Komponenten, Änderung der Busbelastung Leitungskapazität oder einer Hineinschaltung oder Herausnahme einzelner Applikationen, Änderungen ergeben, also wenn die Verzögerungsbedingungen auf dem Bus konstant bleiben.

In einem weiteren Ausführungsbeispiel ist es auch möglich, die Übertragung von Schlüsselworten nur zur Bestimmung der zeitlichen Bedingungen auf dem Bus und der daraus resultierenden Phasenverschiebung des Datensignals vorzunehmen. In gleicher Weise ist es auch möglich, auf die Codierung nach dem Abschluss des Prüfverfahrens oder für die laufende Prüfung einen anderen, z.B. einfacher zu prüfenden Code zu benutzen. Auch kann die Coderedundanz auf Kosten der Fehlererkennung zu dem Zwecke reduziert werden, die Datenübertragungskapazität zu erhöhen. Sowohl die Schlüsselworte als auch die Codierung werden in diesem Falle wahlweise nur für Testzwecke benutzt, um die Phasenbeziehung zwischen Datensignal und Takt zu bestimmen. Eine anschließende ggf. uncodierte Übertragung und ggf. auch der Verzicht auf periodische Schlüsselwörter ist fehlerfrei möglich, wenn die Verzögerungsverhältnisse auf dem Bus sich dann nicht mehr ändern.

## Patentansprüche

1. Verfahren zum Empfangen von Daten, wobei an eine Empfängervorrichtung Daten mittels eines Signals zumindest zeitweise konstanter Frequenz übertragen werden, wobei das Signal von einer ersten Auslesevorrichtung und einer zweiten Auslesevorrichtung zeitlich versetzt ausgelesen wird, wobei das Auslesen mindestens um eine Schaltzeit der Auslesevorrichtungen zeitlich versetzt wird, **dadurch gekennzeichnet, dass** die Ausgangssignale der Auslesevorrichtungen auf eine Gültigkeit der Signale überprüft werden und dass ein gültiges Signal ausgewählt wird.

2. Verfahren nach Anspruch 1, **dadurch gekennzeichnet, dass** das Signal von der ersten Auslesevorrichtung in einem ersten Takt mit der Frequenz ausgelesen wird und dass das Signal von der zweiten Auslesevorrichtung in einem zweiten Takt mit der Frequenz ausgelesen wird.

3. Verfahren nach Anspruch 2, **dadurch gekennzeichnet, dass** die Phase des ersten Taktes gegenüber der Phase des zweiten Taktes um eine halbe Periode verschoben wird.

4. Verfahren nach einem der Ansprüche 2-3, **dadurch gekennzeichnet, dass** der erste Takt und der zweite Takt durch ein Rechtecksignal gegeben werden und der zweite Takt durch eine Invertierung des ersten Takts gewonnen wird.

5. Verfahren nach einem der vorhergehenden Ansprüche, **dadurch gekennzeichnet, dass** die Daten von der ersten Auslesevorrichtung mit einer ersten Flanke des Taktes ausgelesen werden und die Daten von der zweiten Auslesevorrichtung mit einer zweiten Flanke des Taktes ausgelesen werden.

6. Verfahren nach einem der vorhergehenden Ansprüche, **dadurch gekennzeichnet, dass** mit einer Überprüfungsvorrichtung eine Schaltvorrichtung angesteuert wird und dass eines der Ausgangssignale der ersten oder der zweiten Auslesevorrichtung durch die Schaltvorrichtung ausgewählt wird.

7. Verfahren nach einem der vorhergehenden Ansprüche, **dadurch gekennzeichnet, dass** gespeichert wird, welches Signal ausgewählt wurde, vorzugsweise in der Überprüfungsvorrichtung.

8. Verfahren nach einem der vorhergehenden Ansprüche, **dadurch gekennzeichnet, dass** die Signale codiert übertragen werden.

9. Verfahren nach Anspruch 8, **dadurch gekennzeichnet, dass** die Gültigkeit der Signale über eine Prüfung der Gültigkeit des Codes ermittelt wird.

10. Verfahren nach einem der vorhergehenden Ansprüche, **dadurch gekennzeichnet, dass** Schlüsselworte zur Bestimmung der Gültigkeit der Signale und/oder des Codes übertragen werden.

11. Verfahren nach Anspruch 10, **dadurch gekennzeichnet, dass** die Schlüsselwörter jeweils nach einer vorgebbaren Zeitspanne gesendet werden.

12. Verfahren nach einem der vorhergehenden Ansprüche, **dadurch gekennzeichnet, dass** ein Prüfwert aus den empfangenen Daten ermittelt wird und dass eine Gültigkeit der Signale durch einen Vergleich des Prüfwerts mit einem gespeicherten Wert ermittelt wird.

13. Verfahren nach einem der vorhergehenden Ansprüche, **dadurch gekennzeichnet, dass** für den Fall, dass eine Gültigkeit von Daten nicht festgestellt wird, von der Überprüfungsvorrichtung ein Fehlersignal ausgegeben wird.

14. Verfahren nach einem der vorhergehenden Ansprüche, **dadurch gekennzeichnet, dass** ein erster und/oder ein zweiter Takt aus dem Datensignal bestimmt wird.

15. Verfahren nach einem der vorhergehenden Ansprüche, **dadurch gekennzeichnet, dass** Daten, anhand derer die Gültigkeit von Signalen ermittelt werden, an die Überprüfungsvorrichtung übertragen werden.

16. Verwendung des Verfahrens nach einem der vorhergehenden Ansprüche für einen Datenempfang in einem Datenbussystem.

17. Vorrichtung zur Durchführung des Verfahrens nach einem der Ansprüche 1-15.

18. Vorrichtung nach Anspruch 17, **dadurch gekennzeichnet, dass** die erste Auslesevorrichtung ein erstes Schieberegister (22) ist und dass die zweite Auslesevorrichtung ein zweites Schieberegister (24) ist.

19. Vorrichtung nach einem der Ansprüche 17-18, **dadurch gekennzeichnet, dass** der Überprüfungsvorrichtung (33) ein Code zur Überprüfung der Gültigkeit der Ausgangssignale (45, 46) der Auslesevorrichtungen (22, 24) zuführbar ist.

20. Elektrisches Gerät, das an einen Datenbus (11) anschließbar ist, mit einer Vorrichtung nach einem der Ansprüche 17-19.
